# FASCICULE DE BREVET EUROPEEN

(11) **EP 1 930 659 B1**
(45) Date de publication et mention de la délivrance du brevet: **07.06.2017**
(21) Numéro de dépôt: 07122642.7
(22) Date de dépôt: 07.12.2007
(51) Int. Cl.: F23R 3/50, F23R 3/04, F23R 3/28

(54) **Chambre de combustion de turboréacteur**
Brennkammer eines Turbostrahltriebwerks
Jet engine combustion chamber

(30) Priorité: 07.12.2006 FR 0655377
(43) Date de publication de la demande: 11.06.2008
(73) Titulaire: Safran Aircraft Engines, 75015 Paris (FR)
(72) Inventeur: Pieussergues, Christophe, 77370, Nangis (FR); Sandelis, Denis, 77370, Nangis (FR)
(74) Mandataire: Gevers & Orès

(56) Documents cités:
- EP-A- 1 271 059
- EP-A- 1 746 348
- FR-A1- 2 673 454
- US-A- 4 454 711

## Description

La présente invention se rapporte au domaine technique des chambres de combustion pour turboréacteurs. Elle vise en particulier une chambre de combustion et un procédé de réalisation du fond de chambre. Elle vise enfin un turboréacteur équipé d'une telle chambre de combustion.

Dans tout ce qui suit, les termes « axial », « radial », « transversal » correspondent respectivement à une direction axiale, à une direction radiale, et à un plan transversal du turboréacteur, et les termes « amont » et « aval » correspondent respectivement au sens de l'écoulement des gaz dans le turboréacteur.

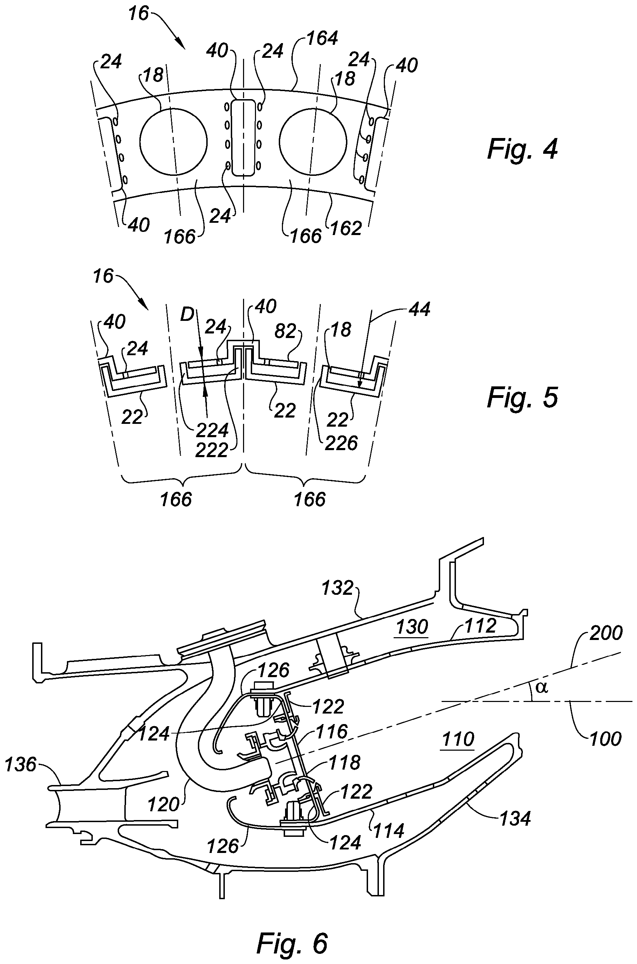

Une chambre de combustion conventionnelle est illustrée sur la figure 6, qui est une coupe axiale montrant une moitié de la chambre de combustion, l'autre moitié de celle-ci se déduisant par symétrie par rapport à l'axe du turboréacteur (non représenté). La chambre de combustion 110 est comprise dans une chambre de diffusion 130 qui est un espace annulaire défini entre un carter externe 132 et un carter interne 134, dans lequel est introduit un comburant comprimé provenant en amont d'un compresseur (non représenté) par l'intermédiaire d'un conduit annulaire de diffusion 136.

Cette chambre de combustion conventionnelle 110 comporte une paroi externe 112 et une paroi interne 114, qui sont coaxiales et sensiblement coniques, et qui s'évasent de l'amont vers l'aval avec un angle de cône α sensiblement compris entre 10 et 12 degrés. Les parois externe 112 et interne 114 de la chambre de combustion 110 sont reliées entre elles vers l'amont de la chambre de combustion par un fond de chambre 116.

Le fond de chambre 116 est une pièce annulaire tronconique, qui s'étend entre deux plans sensiblement transversaux en s'évasant de l'aval vers l'amont. Le fond de chambre 116 se raccorde à chacune des deux parois externe 112 et interne 114 de la chambre de combustion 110. Du fait de la faible inclinaison de la chambre de combustion 110, le fond de chambre 116 présente une faible conicité. Il est doté d'ouvertures d'injection 118 à travers lesquelles passent des systèmes d'injection 120 qui introduisent du carburant à l'extrémité amont de la chambre de combustion 110 où se déroulent les réactions de combustion.

Ces réactions de combustion ont pour effet de faire rayonner de la chaleur de l'aval vers l'amont en direction du fond de chambre 116. Afin d'éviter un endommagement de ce fond de chambre 116, dû à la chaleur, il est prévu des écrans de protection thermique encore appelés déflecteurs 122. Ces déflecteurs 122 sont des plaques sensiblement planes fixées par brasage sur le fond de chambre 116. Ils sont refroidis au moyen de jets d'air de refroidissement pénétrant dans la chambre de combustion 110 à travers des orifices de refroidissement 124 percés dans le fond de chambre 116. Ces jets d'air, s'écoulant de l'amont vers l'aval, sont guidés par des carénages de chambre 126, traversent le fond de chambre 116 à travers les orifices de refroidissement, et viennent impacter une face amont des déflecteurs 122.

Dans des conceptions de turboréacteurs dont la sortie du compresseur à haute pression est centrifuge, le diamètre moyen en sortie de compresseur à haute pression est supérieur au diamètre moyen en entrée de turbine à haute pression. Les parois externe et interne de la chambre de combustion sont donc inclinées en s'évasant de l'aval vers l'amont, et non pas de l'amont vers l'aval comme avec les chambres de combustion conventionnelles précédemment décrites, avec un angle de cône sensiblement compris entre 25 et 35 degrés.

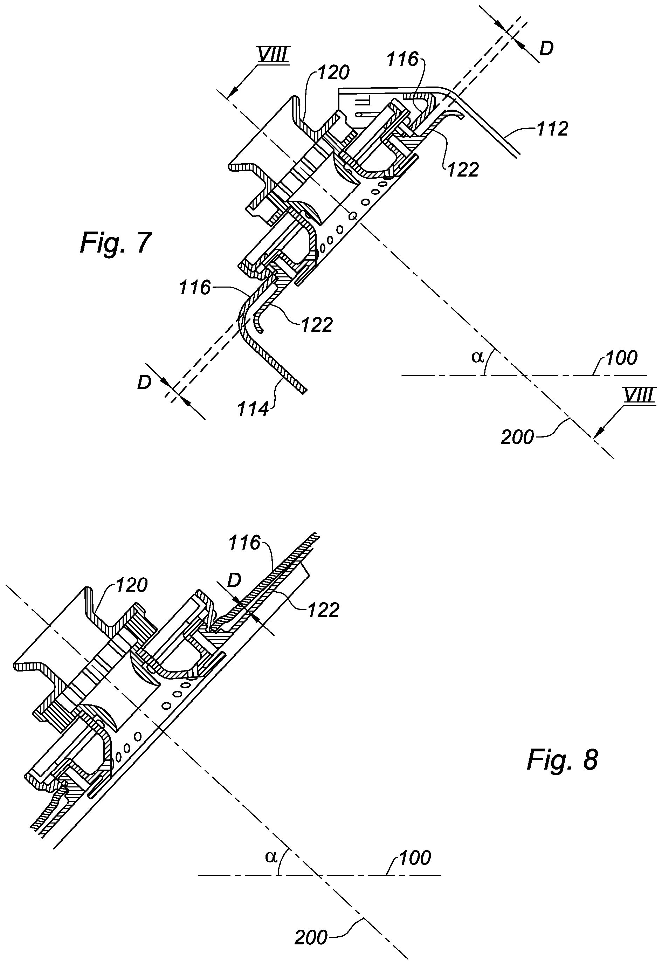

Le document EP1271059A décrit une chambre de combustion selon le préambule de l'objet de la revendication 1. Une inclinaison aussi importante de la chambre de combustion a des répercussions sur la conicité du fond de chambre et sur la position des déflecteurs par rapport au fond de chambre. Une telle chambre de combustion est partiellement illustrée à la figure 7, en coupe axiale. Sur cette figure apparaissent une direction axiale 100 parallèle à l'axe du turboréacteur, la direction principale 200 de la chambre de combustion 110, et l'angle α entre ces deux axes 100, 200. Du fait de l'inclinaison importante de la chambre de combustion 110, le fond de chambre 116 présente une conicité plus importante qu'un fond de chambre de combustion conventionnelle. Cela affecte la distance D entre le fond de chambre à conicité importante et les déflecteurs plans. Dans le plan de la coupe axiale de la figure 7, la distance D entre le fond de chambre 116 et les déflecteurs 122 apparaît comme étant constante. En revanche, comme illustré sur la figure 8, qui est une coupe suivant le plan VIII-VIII de la figure 7, cette distance D s'amenuise en parcourant une génératrice circonférentielle du fond de chambre 116, à un point tel que le fond de chambre 116 et les déflecteurs 122 entrent en contact. Un tel contact entre ces pièces est préjudiciable à un montage correct des déflecteurs dans la chambre de combustion. Il en résulte que le refroidissement du fond de chambre 116 par les déflecteurs 122 n'est pas effectué correctement.

L'invention a pour but de remédier à ces inconvénients, et propose une chambre de combustion de turboréacteur dont le fond de chambre est configuré de telle manière que la distance D entre le fond de chambre et les déflecteurs reste constante.

La chambre de combustion étant une pièce annulaire délimitée par une paroi externe et une paroi interne, lesdites parois externe et interne étant tronconiques, et lesdites parois externe et interne étant reliées en amont par une paroi constituant ledit fond de chambre,
la chambre de combustion étant dotée d'une pluralité de déflecteurs se présentant sous forme de plaques planes qui sont fixées sur une face dudit fond de chambre qui est en regard de l'intérieur de la chambre de combustion,
ledit fond de chambre s'évasant de l'amont vers l'aval se présentant sous la forme d'une pièce sensiblement tronconique et étant caractérisé en ce qu'il est constitué par une succession de portions planes adjacentes.

Chaque portion plane présente un contour s'appuyant sur un secteur angulaire, dont deux côtés sont des segments de droites issus d'un même centre.

De préférence, ledit contour de portion plane possède quatre côtés dont deux côtés sont des arcs de cercles concentriques de même centre, et dont les deux autres côtés sont des segments de droites issus dudit et qui relient ces deux arcs de cercle.

Chaque portion plane présente un contour ayant quatre côtés et s'appuyant sur un secteur angulaire, dont deux côtés sont des arcs de cercles concentriques de même centre, et dont les deux autres côtés sont des segments de droites issus du même centre et qui relient ces deux arcs de cercle.

L'une au moins desdites portions planes est traversée par une ouverture d'injection.

En outre, le fond de chambre comporte des nervures s'étendant radialement entre lesdites portions planes. De plus, le fond de chambre comporte des orifices de refroidissement le long desdites nervures. De préférence, lesdits orifices de refroidissement s'étendent suivant deux lignes disposées de chaque côté de chaque nervure.

Selon un deuxième aspect, l'invention se rapporte à un procédé de réalisation d'un fond de chambre selon le premier aspect de l'invention, qui comporte au moins une opération d'emboutissage qui déforme un fond de chambre initialement plan afin de réaliser des portions planes.

En outre, le procédé comporte au moins une opération de perçage pour réaliser une ouverture d'injection à travers au moins une portion plane.

De plus, ladite opération d'emboutissage réalise des nervures entre lesdites portions planes.

En outre, le procédé comporte au moins une opération de perçage pour réaliser des orifices de refroidissement le long desdites nervures.

Selon un troisième aspect, l'invention se rapporte à une chambre de combustion comportant un fond de chambre avec des déflecteurs se présentant sous forme de plaques sensiblement planes, le nombre desdits déflecteurs étant égal au nombre des portions planes du fond de chambre, et chaque déflecteur étant fixé sur l'une desdites portions planes, sur une face en regard de l'intérieur de ladite chambre de combustion.

De préférence, lesdits déflecteurs comportent des rebords latéraux destinés à coopérer avec lesdites nervures pour éviter des fuites latérales.

Selon un quatrième aspect, l'invention se rapporte à un turboréacteur équipé d'une chambre de combustion selon le premier aspect.

L'invention présente l'avantage qu'il est possible de maintenir constante la distance D entre le fond de chambre et les déflecteurs, en utilisant des déflecteurs plans similaires à ceux des fonds de chambre des chambres de combustion conventionnelles, ce qui permet de ne pas engendrer de coûts supplémentaires associés à la fabrication de déflecteurs dotés d'une géométrie complexe.

L'invention sera mieux comprise à la lecture de la description détaillée qui va suivre, d'un mode de réalisation particulier de l'invention, fourni à titre indicatif et nullement limitatif, et illustré au moyen des dessins annexés, dans lesquels :
- la figure 1 est une vue en coupe axiale d'une partie de turboréacteur dont la chambre de combustion présente une inclinaison importante, montrant une moitié de la chambre de combustion, l'autre moitié se déduisant par symétrie axiale ;
- la figure 2 représente un fond de chambre schématisé, vu en perspective ;
- la figure 2a représente en vue de dessus une portion plane du fond de chambre ;
- la figure 3 représente le fond de chambre schématisé de la figure 2, en vue plane et vu de l'aval suivant la flèche III de la figure 2 ;
- la figure 4 est une vue plane plus réaliste d'une partie du fond de chambre schématisé de la figure 3, en vue plane et vu de l'aval ;
- la figure 5 est une coupe de cette partie du fond de chambre de la figure 4, vu en coupe selon le plan V-V de la figure 3 ;
- la figure 6, déjà décrite, est une vue en coupe axiale d'une chambre de combustion de la technique antérieure ayant une inclinaison faible ;
- la figure 7, déjà décrite, représente à plus grande échelle, une partie de chambre de combustion de la technique antérieure ayant une inclinaison importante, vue en coupe axiale ; et
- la figure 8, déjà décrite, représente à plus grande échelle, une partie de chambre de combustion de la technique antérieure ayant une inclinaison importante, vue en coupe suivant les flèches VIII-VIII de la figure 7.

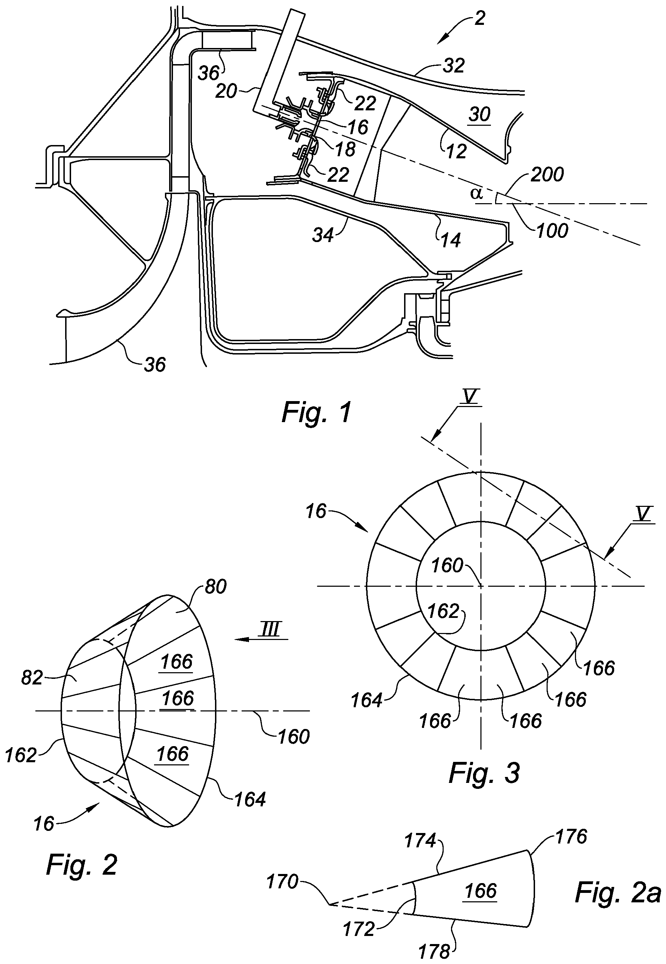

En se référant tout d'abord à la figure 1, il est représenté une portion d'un turboréacteur 2 s'étendant suivant une direction axiale 100 et équipé d'une chambre de combustion 10 et avec une sortie de compresseur à haute pression centrifuge. Cette chambre de combustion 10 comporte une paroi externe 12 et une paroi interne 14, qui sont coaxiales et sensiblement tronconiques, et qui s'évasent de l'aval vers l'amont avec un angle de cône α sensiblement compris entre 25 et 35 degrés.

La chambre de combustion 10 est comprise dans une chambre de diffusion 30 qui est un espace annulaire défini entre un carter externe 32 et un carter interne 34, dans lequel est introduit un comburant comprimé provenant en amont d'un compresseur (non représenté) par l'intermédiaire d'un conduit annulaire de diffusion 36. Du fait de l'inclinaison de la chambre de combustion 10, l'extrémité amont de celle-ci se trouve radialement plus à l'extérieur que l'extrémité aval de celle-ci.

Les parois externe 12 et interne 14 de la chambre de combustion 10 sont reliées entre elles vers l'amont de la chambre de combustion par un fond de chambre 16, qui est une pièce sensiblement annulaire et tronconique s'étendant entre deux plans sensiblement transversaux en s'évasant de l'amont vers l'aval. Le fond de chambre 16 se raccorde à chacune des deux parois externe 12 et interne 14 de la chambre de combustion 10. Il est doté d'ouvertures d'injection 18 à travers lesquelles passent des systèmes d'injection 20 qui traversent le carter extérieur 32 et qui introduisent du carburant à l'extrémité amont de la chambre de combustion 10 où se déroulent les réactions de combustion.

La figure 2 représente de façon schématique et en perspective un fond de chambre 16, qui est une pièce sensiblement tronconique, dont l'axe 160 est confondu, en service, avec l'axe du turboréacteur. Le fond de chambre 16 présente un bord amont 162 et un bord aval 164. Il s'évase du bord amont 162 vers le bord aval 164. Il se présente sous la forme d'une enveloppe tronconique ayant une face intérieure 80 et une face extérieure 82. Le corps du fond de chambre n'est pas continûment courbe, mais présente des portions planes 166, ou facettes, successives et adjacentes. Une portion plane 166 est représentée en vue de dessus à la figure 2a. Elle possède un contour ayant quatre côtés 172, 174, 176, 178 qui s'appuie sur un secteur angulaire issu d'un point 170. Deux des côtés 172, 176 sont des arcs de cercle concentriques et centrés sur le point 170. Les deux autres côtés 174, 178 sont des segments de droite issus du point 170 et s'appuyant sur le secteur angulaire, qui relient les deux arcs de cercle 172, 176.

La figure 3 est une représentation schématique du même fond de chambre 16, vu en vue plane depuis l'aval, comme indiqué par la flèche III de la figure 2. Sur cette vue apparaissent les portions planes 166 qui sont régulièrement réparties sur le corps du fond de chambre 16 entre son bord amont 162 et son bord aval 164.

La figure 4 est une vue partielle analogue à la figure 3 représentant de façon plus réaliste une partie de fond de chambre 16 vue en vue plane depuis l'aval. Le fond de chambre comporte des ouvertures d'injection 18 ménagées à travers chacune des portions planes 166. Ces ouvertures d'injection 18 ont pour fonction de laisser passer les systèmes d'injection 20 déjà décrits en référence à la figure 1. Chaque ouverture d'injection 18 est sensiblement centrée sur la portion plane 166 correspondante. A la jonction entre deux portions planes 166 adjacentes, le fond de chambre 16 comporte des nervures 40, qui s'étendent de son bord amont 162 à son bord aval 164, suivant une direction sensiblement rectiligne et perpendiculaire auxdits bords 162, 164. Ces nervures 40 forment des creux sur la face intérieure 80 du fond de chambre 16 et des bossages sur sa face extérieure 82. Sur l'exemple illustré, les nervures 40 ont une forme sensiblement rectangulaire et présente une épaisseur relativement faible qui peut varier de 0 à 2 ou 3 mm. Elles ne s'étendent pas jusqu'à chacun des deux bords amont 162 et aval 164, mais s'arrêtent un peu avant ceux-ci, à une distance sensiblement comprise entre 0,5 et 2 mm. Le long des nervures 40, le fond de chambre 16 comporte des orifices de refroidissement 24, dont la fonction sera décrite plus en détail ci-après. Sur l'exemple illustré, les orifices de refroidissement 24 sont alignés de part et d'autre de chaque nervure 40 et sont au nombre de quatre de chaque côté de chaque nervure 40.

La figure 5 est une vue du fond de chambre 16, en coupe suivant le plan V-V de la figure 3. Cette vue montre les portions planes 166, et, à la jonction entre celle-ci, les bossages formés par les nervures 40 sur la face extérieure 82 du fond de chambre 16. De chaque côté de chaque nervure 40 apparaissent les orifices de refroidissement 24 qui sont ménagés à travers les portions planes 166. La figure 5 montre également des déflecteurs 22, qui sont des plaques sensiblement planes fixées sur le fond de chambre 16. Ces déflecteurs comportent des rebords latéraux 222 qui s'engagent chacun dans une des deux nervures 40 qui bordent la portion plane 166 réceptrice du déflecteur 22. La coopération de ces rebords latéraux 222 avec lesdites nervures 40 permet d'éviter des fuites latérales. Chaque déflecteur 22 comporte également un trou 226 sensiblement central qui se trouve en regard de l'ouverture d'injection 18 de la portion plane 166 réceptrice de ce déflecteur 22, afin de laisser passer le système d'injection 20 correspondant (voir figure 1). Sur l'exemple illustré, ces trous centraux 226 sont des trous ayant des bords tombés 224. La fixation des déflecteurs 22 sur le fond de chambre 16 est de préférence réalisée par brasage au niveau des trous centraux 226.

Avec une telle configuration, la distance D qui sépare chaque déflecteur 22 de la portion plane 166 qui le reçoit reste constante, et le refroidissement des déflecteurs 22 peut être effectué de façon satisfaisante. Le refroidissement est matérialisé à la droite de la figure 5 par une flèche 44 qui représente un jet d'air provenant de l'amont et traversant les orifices de refroidissement 24 d'une portion plane 166 du fond de chambre 16, pour venir impacter le déflecteur 22 fixé sur cette portion plane 166.

La réalisation du fond de chambre 16 selon l'invention met en oeuvre au moins une opération de déformation à la pression et plusieurs opérations de perçage. On part d'une pièce tronconique de révolution que l'on déforme par une opération d'emboutissage afin de transformer le corps du tronc de cône en une succession de portions planes adjacentes les unes aux autres. Au cours de cette opération d'emboutissage, des nervures sont également réalisées entre les portions planes.

Puis on effectue des opérations de perçage consistant à percer des ouvertures d'injection sensiblement au centre de chaque portion plane, et à percer des orifices de refroidissement répartis dans chaque portion plane et le long de chaque nervure. De préférence, les orifices de refroidissement sont percés de chaque côté de chaque nervure. Le nombre et les positions des orifices de refroidissement ne sont pas limités.

## Revendications

1. Chambre de combustion (10) annulaire de turboréacteur (2), délimitée par une paroi externe (12) et une paroi interne (14), lesdites parois externe (12) et interne (14) étant tronconiques, et lesdites parois externe (12) et interne (14) étant reliées en amont par une paroi constituant un fond de chambre (16), comprenant une pluralité de déflecteurs (22) se présentant sous forme de plaques planes fixées sur une face (80) dudit fond de chambre (16) qui est en regard de l'intérieur de la chambre de combustion (10), ledit fond de chambre (16) s'évasant de l'amont vers l'aval, se présentant sous la forme d'une pièce sensiblement tronconique et étant **caractérisé en ce qu'**il est constitué par une succession de portions planes (166) adjacentes.

2. Chambre de combustion (10) selon la revendication 1, dont chaque portion plane (166) du fond de chambre présente un contour s'appuyant sur un secteur angulaire, dont deux côtés (174 , 178) sont des segments de droites issus d'un même centre (170) amont.

3. Chambre de combustion (10) selon la revendication 2, dont ledit contour de portion plane (166) possède quatre côtés (172, 174, 176, 178) dont deux côtés (172, 176) sont des arcs de cercles concentriques de même centre (170), et dont les deux autre côtés (174, 178) sont des segments de droites issus dudit centre (170) et qui relient ces deux arcs de cercle (172, 176).

4. Chambre de combustion (10) selon l'une quelconque des revendications 1 à 3, dont l'une au moins desdites portions planes (166) est traversée par une ouverture d'injection (18).

5. Chambre de combustion (10) selon l'une quelconque des revendications 1 à 4, comportant des nervures (40) s'étendant radialement entre lesdites portions planes (166).

6. Chambre de combustion (10) selon la revendication 5, comportant des orifices de refroidissement (24) le long desdites nervures (40).

7. Chambre de combustion (10) selon la revendication 6, dont lesdits orifices de refroidissement (24) s'étendent suivant deux lignes radiales disposées de chaque côté de chaque nervure (40).

8. Chambre de combustion (10) selon la revendication 1, **caractérisée en ce qu'**elle comporte des déflecteurs (22) se présentant sous forme de plaques sensiblement planes, le nombre desdits déflecteurs (22) étant égal au nombre des portions planes (166) du fond de chambre (16), et **en ce que** chaque déflecteur (22) est fixé sur l'une desdites portions planes (166), sur une face (80) en regard de l'intérieur de ladite chambre de combustion (10).

9. Chambre de combustion (10) selon la revendication 8, dont lesdits déflecteurs (22) comportent des rebords latéraux (222) coopérant avec lesdites nervures (40) pour éviter des fuites latérales.

10. Turboréacteur (2), **caractérisé en ce qu'**il comporte une chambre de combustion (10) selon l'une quelconque des revendications 1 à 9.

11. Procédé de réalisation d'une chambre de combustion selon l'une quelconque des revendications 1 à 7, **caractérisé en ce qu'**il comporte au moins une opération d'emboutissage qui déforme un fond de chambre initialement plan afin de réaliser des portions planes (166).

12. Procédé selon la revendication 11, **caractérisé en ce qu'**il comporte au moins une opération de perçage pour réaliser une ouverture d'injection (18) à travers au moins une portion plane (166).

13. Procédé selon la revendication 11 ou 12, **caractérisé en ce que** ladite opération d'emboutissage réalise des nervures (40) entre lesdites portions planes (166).

14. Procédé selon la revendication 13, **caractérisé en ce qu'**il comporte au moins une opération de perçage pour réaliser des orifices de refroidissement (24) le long desdites nervures (40).

## Patentansprüche

1. Ringförmige Brennkammer (10) eines Turbostrahltriebwerks (2), die durch eine äußere Wand (12) und eine innere Wand (14) begrenzt ist, wobei die äußere (12) und innere (14) Wand kegelstumpfförmig sind, und wobei die äußere (12) und innere (14) Wand vorne durch eine Wand verbunden sind, die einen Kammerboden (16) bildet, umfassend mehrere Abweiser (22), die die Form von ebenen Platten aufweisen, die auf einer Fläche (80) des Kammerbodens (16) befestigt sind, die dem Inneren der Verbrennungskammer (10) gegenüberliegt, wobei der Kammerboden (16), der sich von vorn nach hinten aufweitet, die Form eines im Wesentlichen kegelstumpfförmigen Teils aufweist und **dadurch gekennzeichnet ist, dass** er durch eine Abfolge von benachbarten ebenen Abschnitten (166) gebildet ist.

2. Brennkammer (10) nach Anspruch 1, wobei jeder ebene Abschnitt (166) des Brennkammerbodens eine Kontur aufweist, die sich auf einen Winkelsektor stützt, dessen zwei Seiten (174, 178) Liniensegmente sind, die aus einem gleichen vorderen Zentrum (170) stammen.

3. Brennkammer (10) nach Anspruch 2, wobei die Kontur des ebenen Abschnitts (166) vier Seiten (172, 174, 176, 178) aufweist, wovon zwei Seiten (172, 176) konzentrische Kreisbögen des gleichen Zentrums (170) sind, und wovon die zwei anderen Seiten (174, 178) Liniensegmente sind, die aus dem Zentrum (170) stammen und die diese zwei Kreisbögen (172, 176) verbinden.

4. Brennkammer (10) nach einem der Ansprüche 1 bis 3, wobei mindestens einer der ebenen Abschnitte (166) von einer Einspritzöffnung (18) durchquert ist.

5. Brennkammer (10) nach einem der Ansprüche 1 bis 4, umfassend Rippen (40), die sich radial zwischen den ebenen Abschnitte (166) erstrecken.

6. Brennkammer (10) nach Anspruch 5, umfassend Kühlöffnungen (24) entlang der Rippen (40).

7. Brennkammer (10) nach Anspruch 6, wobei sich die Kühlöffnungen (24) entlang zweier radialer Linien erstrecken, die auf jeder Seite von jeder Rippe (40) angeordnet sind.

8. Brennkammer (10) nach Anspruch 1, **dadurch gekennzeichnet, dass** sie Abweiser (22) aufweist, die die Form von im Wesentlichen ebenen Platten aufweisen, wobei die Anzahl der Abweiser (22) gleich der Anzahl der ebenen Abschnitte (166) des Kammerbodens (16) ist, und dass jeder Abweiser (22) an einem der ebenen Abschnitte (166) auf einer Fläche (80) befestigt ist, die dem Inneren der Brennkammer (10) gegenüberliegt.

9. Brennkammer (10) nach Anspruch 8, wobei die Abweiser (22) seitliche Ränder (222) aufweisen, die mit den Rippen (40) zusammenwirken, um seitliche Undichtigkeiten zu vermeiden.

10. Turbostrahltriebwerk (2), **dadurch gekennzeichnet, dass** es eine Brennkammer (10) nach einem der Ansprüche 1 bis 9 aufweist.

11. Verfahren zur Herstellung einer Brennkammer nach einem der Ansprüche 1 bis 7, **dadurch gekennzeichnet, dass** es mindestens einen Tiefziehvorgang aufweist, der einen Kammerboden, der ursprünglich eben ist, verformt, um ebene Abschnitte (166) zu erstellen.

12. Verfahren nach Anspruch 11, **dadurch gekennzeichnet, dass** es mindestens einen Bohrvorgang aufweist, um eine Einspritzöffnung (18) durch mindestens einen ebenen Abschnitt (166) zu erstellen.

13. Verfahren nach Anspruch 11 oder 12, **dadurch gekennzeichnet, dass** der Tiefziehvorgang Rippen (40) zwischen den ebenen Abschnitten (166) erstellt.

14. Verfahren nach Anspruch 13, **dadurch gekennzeichnet, dass** es mindestens einen Bohrvorgang aufweist, um Kühlöffnungen (24) entlang der Rippen (40) zu erstellen.

## Claims

1. Annular jet engine (2) combustion chamber (10), delimited by an outer wall (12) and an inner wall (14), said outer (12) and inner (14) walls being frustoconical, and said outer (12) and inner (14) walls being connected upstream by a wall constituting a chamber base (16), comprising a plurality of deflectors (22) presenting in the form of flat plates fixed on one face (80) of said chamber base (16) which is facing the inside of the combustion chamber (10), said chamber base (16) broadening from upstream towards downstream, presenting in the form of a substantially frustoconical part and **characterised in that** it is constituted by a succession of adjacent planar portions (166).

2. Combustion chamber (10) according to Claim 1, of which each planar portion =(166) of the chamber base presents a contour resting on an angular sector, of which both edges (174, 178) are straight lines issuing from a single centre (170) upstream.

3. Combustion chamber (10) according to Claim 2, of which said contour of planar portion (166) has four sides (172, 174, 176, 178) of which two sides (172, 176) are arcs of concentric circles with the same centre (170), and of which the other two sides (174, 178) are straight lines issuing from said centre (170) and which connect the two arcs of circle (172, 176).

4. Combustion chamber (10) according to any one of Claims 1 to 3, in which at least one of the said planar portions (166) is traversed by an injection opening (18).

5. Combustion chamber (10) according to any one of Claims 1 to 4, comprising ribs (40) radiating out between said planar portions (166).

6. Combustion chamber (10) according to Claim 5, comprising cooling orifices (24) along said ribs (40).

7. Combustion chamber (10) according to Claim 6, of which said cooling orifices (24) spread out following two radial lines disposed on each side of each rib (40).

8. Combustion chamber (10) according to Claim 1, **characterised in that** it comprises deflectors (22) presenting in the form of substantially flat plates, the number of said reflectors (22) being equal to the number of planar portions (166) of the chamber base (16), and **in that** each deflector (22) is fixed on one of said planar portions (166), on one face (80) facing the inside of said combustion chamber (10).

9. Combustion chamber (10) according to Claim 8, of which said deflectors (22) comprise lateral edges (222) that cooperate with said ribs (40) to avoid lateral leaks.

10. Jet engine (2), **characterised in that** it comprises a combustion chamber (10) according to any one of Claims 1 to 9.

11. Method for creating a combustion chamber according to any one of Claims 1 to 7, **characterised in that** it comprises at least one stamping operation which deforms an initially flat chamber base in order to create planar portions (166).

12. Method according to Claim 11, **characterised in that** it comprises at least one piercing operation to create an injection opening (18) through at least one planar portion (166).

13. Method according to Claim 11 or 12, **characterised in that** said stamping operation creates ribs (40) between said planar portions (166).

14. Method according to Claim 13, **characterised in that** it comprises at least one piercing operation to create cooling orifices (24) along said ribs (40).
